**Europäisches Patentamt**

**European Patent Office**

**Office européen des brevets**

(11) Publication number: **0 196 382**

**A1**

# (12) EUROPEAN PATENT APPLICATION

(21) Application number: **85306258.6**

(22) Date of filing: **04.09.85**

(51) Int. Cl.⁴: **G 02 B 6/10**
**G 02 B 6/28**

(30) Priority: **01.04.85 US 718684**

(43) Date of publication of application:
**08.10.86 Bulletin 86/41**

(84) Designated Contracting States:
**AT BE CH DE FR GB IT LI LU NL SE**

(71) Applicant: **Litton Systems, Inc.**
**360 North Crescent Drive**
**Beverly Hills California 90210(US)**

(72) Inventor: **Pavlath, George A.**
**3513 Calle Quebracho**
**Thousand Oaks California 91360(US)**

(74) Representative: **Rushton, Ronald et al,**
**SOMMERVILLE & RUSHTON 11 Holywell Hill**
**St. Albans Hertfordshire AL1 1EZ(GB)**

(54) **Fiber optic polarizer for producing circularly and elliptically polarized light.**

(57) A fiber optic polarizer includes a length of fiber optic material (12) from which a portion of the cladding has been removed to form an interaction region. The fiber is held adjacent a coupling material (26) that is circulary birefringent or both circularly and linearly birefringent along different axes to permit the evanescent field of light propagating in the fiber (12) to interact with the material. Light of an elliptical polarization which propagates slower in the cou- pling material (16) than in the fiber (12) will be radiated from the fiber into the coupling material by evanescent coupling. Light that propagates slower in the fiber remains in the fiber is highly elliptically polarized in a predetermined direction. The ellipticity of the desired elliptical polarization may be controlled by controlling the direction of the optic axis relative to the axes of linear and circular birefringence.

Fig. 1

1

# FIBER OPTIC POLARIZER FOR PRODUCING
## CIRCULARLY AND ELLIPTICALLY POLARIZED LIGHT
### Background of the Invention

The present invention relates generally to the polarization of light and particularly to polarizers for producing circularly and elliptically polarized light in optical fibers.

A variety of fiber optic devices require circularly polarized light for optimum performance. Such devices include certain types of fiber optic rotation sensors, optical isolators and Faraday phase shifters. Other devices require elliptically polarized light.

One prior art device for producing circularly polarized or elliptically polarized light uses a fiber optic linear polarizer and two coils of optical fiber, each coil having its radius and length adjusted to provide a quarter wavelength retardation. Such a fiber optic linear polarizer is disclosed in U.S. Patent 4,386,822, entitled "Polarizer and Method" issued on June 7, 1983 and assigned to the Leland Stanford Junior University. A quarter wavelength optical fiber coil is disclosed in U.S. Patent 4,389,090, entitled "Fiber Optic Polarization Controller" issued on June 21, 1983 and assigned to the Leland Stanford Junior University. To produce circularly polarized light, the planes of each of the coils are orthogonal to one another; and the linear polarizer is oriented to pass linearly polarized light oriented at 45° to the planes of the coils. Variation of the angle from 45° produces elliptical polarized light of varying ellipticity. Another type of circular polarizer comprises a quarter wavelength coil in front of the linear polarizer.

Circularly polarized light produced using known fiber optic polarizers contains a residual amount of circular polarization in the sense opposite to the desired polarization. The intensity of the unwanted polarization ranges from one-tenth of one percent to as high as one percent of the total intensity of the beam. In certain types of fiber optic devices, such as rotation sensors, the amount of residual polarization

2

required for optimum operation must be no more than about one part per million, a factor of one hundred to one thousand times lower than the capability of the best prior art polarizers. In addition, production of circular or elliptical polarized light using prior art devices requires at least two elements, i.e., a linear polarizer and a quarter wave coil.

Therefore, there exists a need for a fiber optic polarizer that produces circular or elliptical polarized light of high purity and which uses a single element to reduce the difficulty and cost of manufacture.

## SUMMARY OF THE INVENTION

The present invention provides apparatus and method for producing polarized light of high purity, thereby overcoming the difficulties of prior art polarizers. The present invention provides polarized light having essentially only the the desired polarization and is, therefore, suitable for use in applications such as rotation sensors, which require light of essentially one polarization in order to provide the degree of accuracy required in measuring rotations for aircraft guidance applications.

Accordingly the present invention provides a fiber optic polarizer for producing circular or elliptically polarized light of a purity which is higher than heretofore available. The invention provides such a polarizer comprising a single element, thereby requiring lower manufacturing costs than prior fiber optic polarizers.

A fiber optic polarizer for producing an ouput signal having a predetermined elliptical polarization from an input optical signal of arbitrary polarization is characterised by an optical fiber having a core and a cladding for propagating the optical signal; an interaction region formed in a portion of the optical fiber; and a coupler positioned adjacent the interaction region for interacting with the evanescent field of the optical signal propagating in the interaction region to radiate components of the optical signal having a first selected elliptical polarization from the optical fiber so that only light of a second selected elliptical polarization is guided by the optical fiber past the interaction region.

A fiber optic polarizer according to the invention for producing elliptically polarized light may also be characterised by a base having a slot therein; an optical fiber having a core and a cladding, an interaction region being formed in the optical fiber where a portion of the fiber has a cladding thinner than the neighboring regions of the fiber, the interaction region being mounted within the slot so that the thinner cladding faces outwardly from the slot; and a birefringent material mounted adjacent the interaction region so that evanescent field coupling transfers light of all but a selected first elliptical polarization out of the fiber into the birefringent material while light of a selected elliptical polarization remains within the fiber.

A fiber optic polarizer according to the invention may include a single structural element comprising a length of optical fiber having a portion of the cladding removed therefrom to form an interaction region, which is placed adjacent a birefringent material. The evanescent field of the light propagating along the fiber interacts with the birefringent medium at the interaction region to couple undesired circular and elliptical polarizations out of the fiber while permitting desired circular or elliptical polarizations to remain in the fiber. The birefringent material has an index of refraction for light of an undesired polarization that is greater than the index of refraction of the fiber for the undesired polarization. Since light readily propagates across an interface from a region of lower refractive index to a region of higher refractive index, the undesired polarization propagates out of the fiber into the birefringent material. The refractive index of the birefringent material for light of a desired polarization is less than the refractive index of the fiber, so that the desired polarization remains in the fiber by internal reflection at the fiber-birefringent material interface at the interaction region. Although not essential to the operation of the

4

invention, the fiber is preferably mounted in a curved groove in a substrate. The interaction region is formed by grinding and polishing the substrate and fiber until a portion of the fiber cladding is removed so that the evanescent field of light guided by the fiber may interact with the birefringent material. Since the intensity of the evanescent field decreases exponentially with distance from the core, the cladding must be made sufficiently thin for the evanescent field to penetrate into the birefringent material or else the undesired polarization will not be coupled out of the fiber into the birefringent material.

Elliptical polarization is produced by placing adjacent the interaction region a material that is circularly birefringent for light propagating along a first axis and linearly birefringent for light propagating along an axis that is perpendicular to the axis of circular birefringence. The material is preferably a crystal that is cut so that its optical axis is at a predetermined angle to the plane of the interaction region. The ellipticity of the wave remaining in the fiber after propagating past the birefringent crystal depends upon the refractive indices of the fiber and the crystal and the angle of the optic axis in the crystal to the plane of interaction region of the fiber.

A method according to the invention for producing elliptically polarized light in an optical fiber is characterised by the steps of removing part of the cladding from a portion of the optical fiber to form an interaction region; and positioning a birefringent material adjacent the interaction region such that evanescent field coupling transfers light of a first selected elliptical polarization from the optical fiber into the birefringent material while light of a second selected elliptical polarization remains in the fiber.

The method of the invention for producing polarized light circularly or elliptically polarized light is also characterised by the steps of forming a slot in a base; placing a length of an optical fiber having a core and a cladding in the slot so that a portion of the cladding projects out of the slot; forming an

5

interaction region wherein a portion of the evanescent field of a light signal propagating within the optical fiber extends out of the cladding; and placing a coupling material adjacent the interaction region so that evanescent field coupling transfers light of all but a selected elliptical polarization propagated by the optical fiber from the fiber into the coupling material while light of the selected polarization propagated by the fiber remains within the fiber.

BRIEF DESCRIPTION OF THE DRAWINGS

These and other advantages of the present invention are best understood through reference to the drawings in which:

Figure 1 is a cross-sectional view of a fiber optic polarizer for producing circularly polarized light constructed in accordance with one embodiment of the present invention;

Figure 2 is a cross-sectional view of the polarizer of Figure 1 taken along line 2-2;

Figure 3 is a perspective view of the lower portion of the coupler of Figure 1 separated from the birefringent material, showing the associated fiber mounting and the oval-shaped facing surface of the fiber;

Figure 4 is a cross-sectional view of a polarizer for the production of elliptically polarized light constructed in accordance with another embodiment of the invention; and

Figure 5 is a perspective view of the polarizer of Figure 4.

DETAILED DESCRIPTION OF THE INVENTION

Some familiarity with polarization of light and propagation of light within an optical fiber will facilitate an understanding of the present invention. Therefore, a brief description of the concepts used to describe the propagation and polarization of a light wave in a fiber will be presented.

It is well-known that a light wave may be represented by a time-varying electromagnetic field comprising orthogonal electric and magnetic field vectors having a frequency equal to the frequency of the light wave. An electromagnetic wave propagating through a guiding structure can be described by a set of normal modes. The normal modes are the permissible distributions of the electric and magnetic fields within the guiding structure, for example, a fiber optic waveguide. The field distributions are directly related to the distribution of energy within the structure. The normal modes are generally represented by mathematical functions that describe the field components in the wave in terms of the frequency and spatial distribution in the guiding structure. The specific functions that describe the normal modes of a waveguide depend upon the geometry of the waveguide. For an optical fiber, where the guided wave is confined to a structure having a circular cross section of fixed dimensions, only fields having certain frequencies and spatial distributions will proagate without severe attenuation. The waves having field components that propagate unattenuated are called normal modes. A single mode fiber will propagate only one spatial distribution of energy, that is, one normal mode, for a signal of a given frequency.

In describing the normal modes, it is convenient to refer to the direction of the electric and magnetic fields relative to the direction of propagation of the wave. If only the electric field vector is perpendicular to the direction of propagation, which is usually called the optic axis, then the wave is the to be a transverse electric (TE) mode. If only the magnetic field vector is perpendicular to to the optic axis, the wave is a transverse magnetic (TM) mode. If both the electric and magnetic field vectors are perpendicular to the optic axis, then the wave is a transverse electromagnetic (TEM) mode.

None of the normal modes require a definite direction of the field components; and in a TE mode, for example, the electric field may be in any direction that is perpendicular to the optic axis. The direction of the electric field vector in an electromagnetic wave is the polarization of the wave. In general, a wave will have random polarization in which there is a uniform distribution of electric field vectors pointing in all directions permissible for a given mode. If all the electric field in a wave points in only a particular direction, the wave is linearly polarized. If the electric field consists of two orthogonal electric field components of equal magnitude, the electric field is circularly polarized, because the net electric field is a vector that rotates around the optic axis at an angular velocity equal to the frequency of the wave. If the two linear polarizations are unequal, the wave has elliptical polarization. In general, any arbitrary polarization can be represented by the sum of two orthogonal linear polarizations, two oppositely directed circular polarizations or two counter rotating elliptical polarizations that have orthogonal major axes.

The boundary between the core and cladding is a dielectric interface at which certain well-known boundary conditions on the field components must be satisfied. For example, the component of the electric field perpendicular to the interface must be continuous. A single mode optical fiber propagates electromagnetic energy having an electric field component perpendicular to the core-cladding interface. Since the fiber core has an index of refraction greater than that of the cladding and light impinges upon the interface at angles greater than or equal to the critical angle, essentially all of the electric field remains in the core by internal reflection at the interface. To satisfy both the continuity and internal reflection requirements, the radial electric field component in the cladding must be a rapidly decaying exponential function. An exponentially decaying electric field is usually called the "evanescent field."

The velocity of an optical signal depends upon the index of refraction of the medium through which the light propagates. Certain materials have different refractive indices for different polarizations. A material that has two refractive indices is the to be birefringent. The polarization of the signal propagating along a single mode optical fiber is sometimes referred to as a mode. A standard single mode optical fiber may be regarded as a two mode fiber because it will propagate two waves of the same frequency and spatial distribution that have two different polarizations. Two different polarization components of the same normal mode can propagate through a birefringent material unchanged except for a velocity difference between the two polarizations.

Circular birefringence, linear birefringence, and elliptical birefringence are each described with reference to different polarization modes. If a material exhibits circular birefringence, the polarization of a light wave is expressed as a combination of two counter-rotating components. One of the circular polarizations is referred to as "right-hand circular" while the other is referred to as "left-hand circular". In a non-birefringent material both right hand and left hand circular polarizations travel at the same velocity. The counterrotating electric field vectors of the circularly polarized components of the light represent the polarization modes for circular birefringence. If the light is linearly polarized, the circular polarization vectors are in phase with one another and are of equal amplitude. If the light is elliptically polarized, the circular polarization vectors are of unequal amplitudes. In general, elliptically polarized light may have varying degrees of ellipticity; and the polarization may range from linearly polarized at one extreme to circularly polarized at the other extreme.

In a circularly birefringent material, the velocity of propagation of one circular polarization vector is greater than the velocity of propagation of the counterrotating polarization vector. Similarly, in a material that is linearly birefringent, the propagation velocity of the light in one of the linearly polarized modes is greater than the propagation velocity of the light in the other normal linearly polarized mode. Elliptical birefringence results when both linear birefringence and circular birefringence exist at a point in a material through which the light wave is propagating. The elliptical birefringence affects the polarization of light in a complex manner which depends, in part, upon the relative magnitudes of the linear birefringence and the circular birefringence.

In summary, any polarized light can be represented by two circularly polarized waves having proper phase and amplitude. Alternatively, the light could be represented by either elliptically rotating components or by perpendicular linearly polarized components of electric field.

There are a number of birefringent materials. For example, depending on their structure and orientation to the light propagating through it, certain crystals are circularly birefringent; and other crystals are linearly birefringent. Other types of crystals, for example quartz, can have both circular birefringence and linear birefringence so as to produce elliptical birefringence for a light wave propagating in a properly chosen direction.

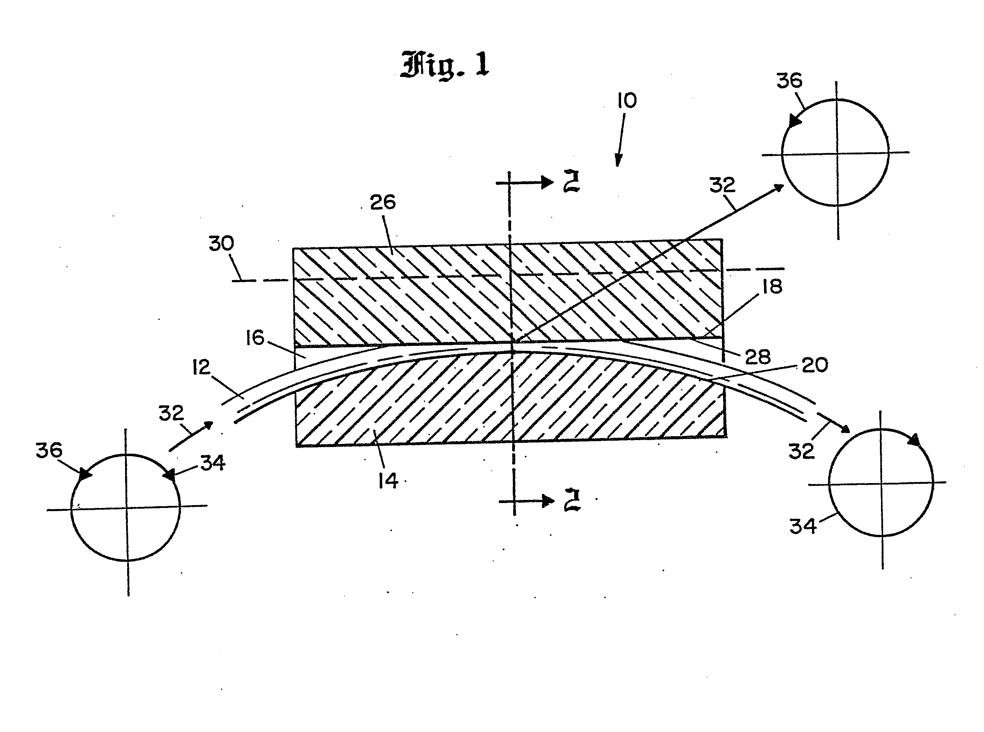

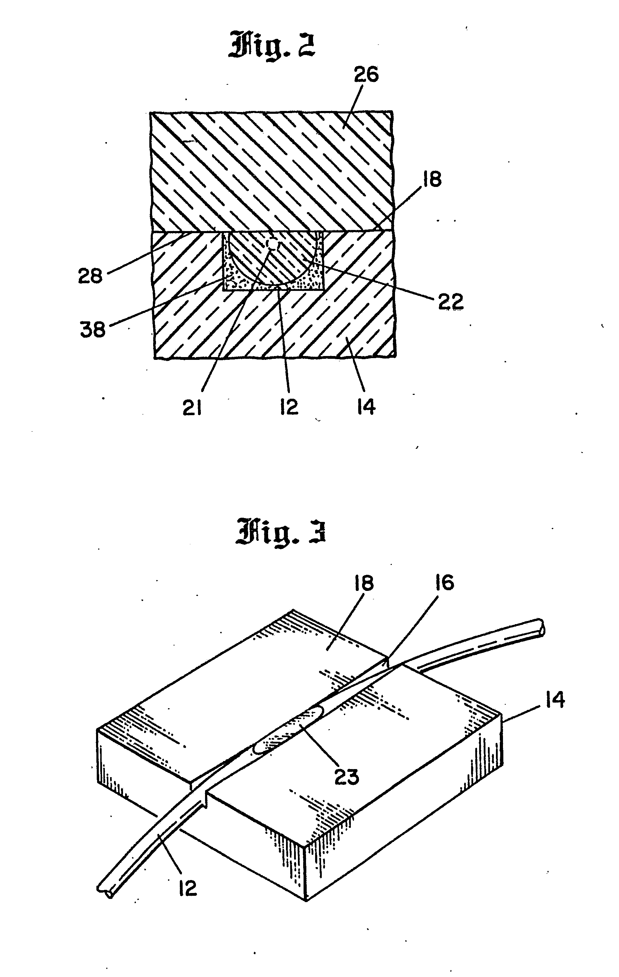

Referring to Figures 1 through 3, a fiber optic polarizer 10 includes a length of a single mode optical fiber 12 held in a base or block 14 by mounting in a longitudinal slot or groove 16, which opens through an optically flat surface 18 of block 14. The groove 16 has a curved bottom wall 20, best shown in Figure 1. The optical fiber 12 is preferably made of a commercially available glass which is doped to have an inner core 21 of one index of refraction and an outer cladding 22 having an index of refraction lower than that of the core 21. The fiber 12 is preferably a single mode fiber, which typically has a core diameter on the order of 10 microns or less and a cladding diameter on the order of 125 microns. As explained above, the number of possible propagation modes depends upon the core diameter and the wavelength of the light propagating therein. Single mode fibers have core diameters so small that they will propagate only a single energy distribution of the chosen wavelength. However, the present invention is not limited to single mode fibers and can be practiced using multimode fibers.

Groove 16 has a radius of curvature which is very large compared to the diameter of fiber 12 and has a width slightly larger than the fiber diameter to permit fiber 12 to be mounted in groove 16 so as to conform to a path defined by botton wall 20. The depth of groove 16 varies from a minimum at the center of the block 14 to a maximum at the edges of the block. The configuration of groove 16 advantageously permits the portion of optical fiber 12 which is mounted in groove 16 to gradually converge from the edges of block 1 toward the center, thereby eliminating any sharp bends or abrupt changes in direction of fiber 12, which could cause power loss through mode perturbation. Although in the embodiment shown, groove 16 is illustrated as being rectangular in cross-section, other suitable cross-sectional contours such as U-shape or V-shape cross-sections that will accomodate fiber 12 are satisfactory.

Referring to Figure 3, the depth of groove 16 is less than the diameter of optical fiber 12 at the center of block 14, while at the edges of block 14, the depth of groove 16 is preferably at least as great as the diameter of optical fiber 12. Cladding material is removed from the center portion of fiber 12 to form an oval-shaped planar surface 23, which is coplanar with top surface 18 of block 14. As is apparent from Figures 1 and 3, the amount of optical fiber material removed from optical fiber 12 increases gradually from zero toward the edges of block 14 to a maximum toward the center of block 14. This tapered removal of the optical fiber material enables the fiber 12 to gradually converge to and diverge from surface 18 or block 14, which is advantageous for properly coupling light guided by the fiber 12 to a body of birefringent material 26. The body of birefringent material 26, which is preferably birefringent body 26 is in close proximity to core 21 of fiber 12.

A suitable index matching material, preferably index matching oil, is placed between the confronting surfaces 18 and 28. The index matching material has a refractive index approximately equal to the refractive index of cladding 22 so as to optically couple fiber 12 to the birefringent body 26. The oil is introduced between the surfaces by capillary action, which is well-known in the art.

A suitable crystalline material is mounted on block 14 by placing an optically flat surface 28 of birefringent body 26 against optically flat upper surface 18 of block 14. An interaction region is formed at the junction of optical fiber 12 and birefringent body 26 in which the evanescent field of light transmitted by optical fiber 12 propagates from the fiber 12 into the birefringent body 26 by evanescent field coupling. It has been found that to ensure proper evanescent field coupling, the amount of material removed from fiber 12 must be carefully controlled so that the spacing between the core portion of fiber 12 and the birefringent body 26 is within a predetermined "critical zone". The evanescent fields extend from the core 21 into the cladding 22, decreasing rapidly with distance outside the core 21. Thus, sufficient material should be removed to permit the birefringent body 26 to be positioned substantially within the evanescent field of the core 21 of the fiber 12. If too little material is removed from fiber 12, core 21 will not be sufficiently close to the birefringent body 26 to permit the evanescent field of light guided by the core 21 to cause the desired interaction with the birefringent body 26; and thus insufficient polarization will result. On the other hand, if too much material is removed, other propagation characteristics of fiber 12 will be harmfully altered, resulting in unwanted loss of light energy due to mode perturbation. To avoid such undesirable effects, none of core 21 is removed and, preferably, the amount of cladding 22 removed is sufficiently small so as not to expose core 21.

When the spacing between core 21 and the birefringent body 26 is within the critical zone, birefringent body 26 receives a significant portion of the evanescent field energy from fiber 12 so that good coupling is achieved without unwanted energy loss. The extent of the critical zone for a particular polarizer is dependent upon a number of interrelated factors, such as the parameters of fiber 12 and birefringent

12

body 26. Further, for a single mode fiber having a step index profile, the critical zone can be quite narrow. In a single mode fiber polarizer of the type shown in Figures 1 to 3, for example, the required spacing between the center of core 21 and birefringent body 26 at the point of minimum spacing is typically less than microns and is preferably less than one micron.

Birefringent body 26 provides different wave velocities for light of different polarizations. With polarizations for which the wave velocity in crystal 26 is slower than the wave velocity in optical fiber 12, fiber 12 does not exhibit a waveguide property; hence, such polarizations carried by fiber 12 are radiated into birefringent body 26, thereby escaping from optical fiber 12. With polarizations for which the wave velocity in birefringent body 26 is greater than in optical fiber 12, the body 26 has no effect on the waveguide properties of fiber 12; hence, no light of such polarization is radiated into body 26 since the light remains in optical fiber 12. Thus, it is possible that, for a given optical signal, light of one polarization remains within optical fiber 12 while light of a second polarization is removed therefrom. Utilizing this technique, it is possible to produce light having a very high degree of polarization within optical fiber 12.

To retain light of one polarization mode within optical fiber 12 while radiating away light of a second polarization, birefringent body 26 is chosen to have at least one refractive index that is equal to or greater than the refractive index of core 21 of optical fiber 12 and a second refractive index that is equal to or less than the refractive index of cladding 22.

In the exemplary embodiment of polarizer 10 shown in Figures 1-3, birefringent body 26 is made of a crystal which is circularly birefringent for light propagating along a certain direction in the crystal defined as an optic axis 30. It should be noted that optic axis 30 is not a particular line through the crystal but a direction. Body 26 is made from birefringent material cut in a plane parallel to optic axis 30. Surface 28 is polished to be optically flat and placed against optically flat surface 18 of block 14 so as to be in close proximity to facing oval surface 22 of fiber 12. Birefringent body 26 is oriented with its optic axis 30 parallel to the portion of optical fiber 12 adjacent surface 28 of birefringent body 26.

Assuming light of arbitrary polarization to be transmitted through fiber 12 and recalling the previous discussion of polarization, the polarization can be described by two counter-rotating electric field vectors. Thus, light propagating through optical fiber 12 is resolved upon interaction of its evanescent fields with birefringent body 26 into two circularly polarized components. In a right hand circularly birefringent crystal, the right hand component (counter-clockwise rotation as viewed against the direction of propagation of the light) travels faster, while in a left hand crystal the left hand component (clockwise motion) travels faster. The indices of crystal 26 and fiber 12 are selected so that the wave velocity in crystal 26 for light of one circular polarization direction is slower than the wave velocity in fiber 12. Therefore, light of this polarization radiates from fiber 12 radiates into crystal 26 and is thereby removed from optical fiber 12. The wave velocity in crystal 26 for light of the oppositely directed circular polarization is greater than in fiber 12 and so that this polarization remains in fiber 12.

In one presently preferred embodiment of the polarizer of Figures 1-3, optical fiber 12 is made of a commercially available quartz with an effective index of refraction for cladding 22 of $N_c = 1.53916$ at a wavelength of approximately 760 nanometers. Birefringent body 26 is made of a circularly birefringent right handed quartz crystal having refractive indices of $N_L = 1.53920$ and $N_R = 1.53914$, where the subscripts "L" and "R" respectively correspond to the index of refraction for right and left hand circularly polarized light at a wavelength of approximately 760 nanometers.

The operation of the preferred embodiment of the polarizer of Figures 1-3 will now be described. Figure 1 shows

14

a light wave propagating through fiber 12 in the direction indicated by arrow 32. The polarization, assumed to be arbitrary for the purposes of this discussion, is represented by a right hand circularly polarized component 34 and a left hand circularly polarized component 36.

The refractive index of birefringent body 26 for right hand circularly polarized light 34 is less than the refractive index of optical fiber 12, therefore, right hand circularly polarized light remains within optical fiber 12 as indicated schematically at the lower right hand side of the polarizer 10 of Figure 1. The refractive index of birefringent body 26 for the left hand circularly polarized light 36 is greater than the refractive index of optical fiber 12; therefore left hand circularly polarized light is radiated into birefringent body 26 as shown schematically at the upper right hand side of polarizer 10 of Figure 1. The light remaining in fiber 12 is thus highly right circularly polarized.

Left handed circularly polarized light is produced by a polarizer identical to the polarizer 10 of Figures 1-3 except that left handed quartz is substituted for the right handed quartz in birefringent body 26. With left handed quartz the direction of ratation of circularly polarized components 34 and 36 would be interchanged, but Figures 1-3 would otherwise remain unchanged.

Polarizer 10 of Figures 1-3 can provide an extinction ratio (the ratio of light removed of the undesired polarization mode to light retained in the undesired polarization mode) in excess of 60 dB with a loss of the desired polarization of only a few percent.

Block 14 may be fabricated of any suitable rigid material, its purpose being to hold the fiber 12 against birefringent body 26. In a preferred embodiment, block 14 is a generally rectangular block of fused quartz glass approximately 5 cm long, 2.5 cm wide, and 1 cm thick. In this embodiment, optical fiber 12 is secured in slot 16 by a suitable bonding material 38 such as epoxy cement. A method of assembly for the invention involves bonding optical fiber 12 into groove 16. Optical fiber 12 and block 14 are then ground and polished as a unit. Polished face 28 of birefringent body 26 is then placed against the surface of block 14 and optical fiber 12, and pressure is applied to reduce the separation to a fraction of a micron. Oil having an index of refraction approximately 1.539 is inserted between birefringent body 26 and optical fiber 12 by capillary action to provide optical matching between body 26 and optical fiber 12 as mentioned above.

Although for purposes of illustration birefringent body 26 is shown to be of the same size as block 14, actually birefringent body 26 can in practice be much smaller than block 14. A typical size for body 26 is a few microns thick, a few microns wide and about one millimeter in length.

In some applications, the interaction region of the fiber 12 may be held adjacent the birefringent material by a suitable adhesive without the support of the substrate 14.

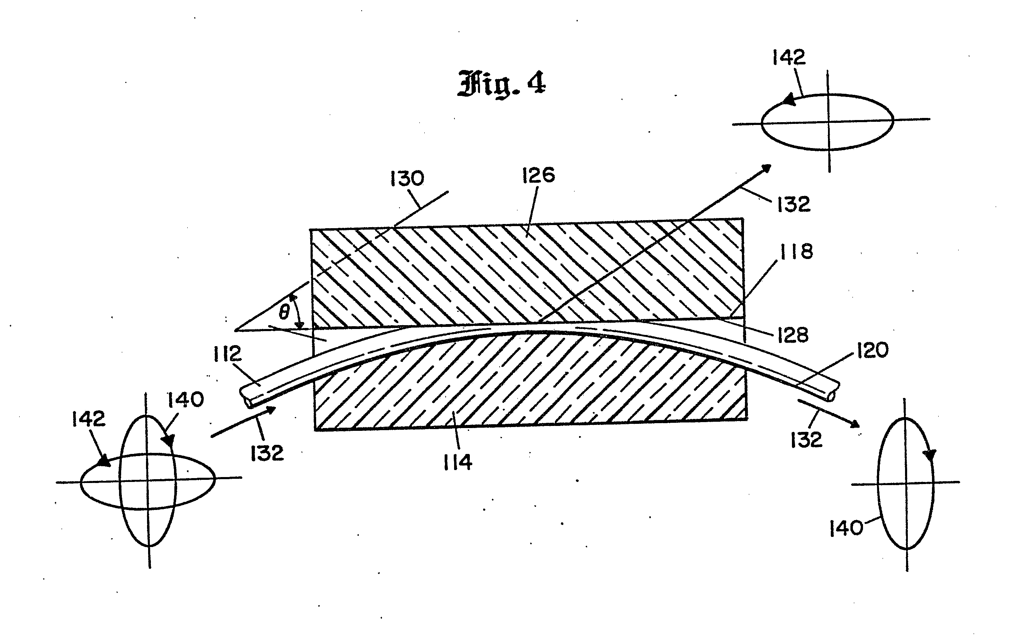

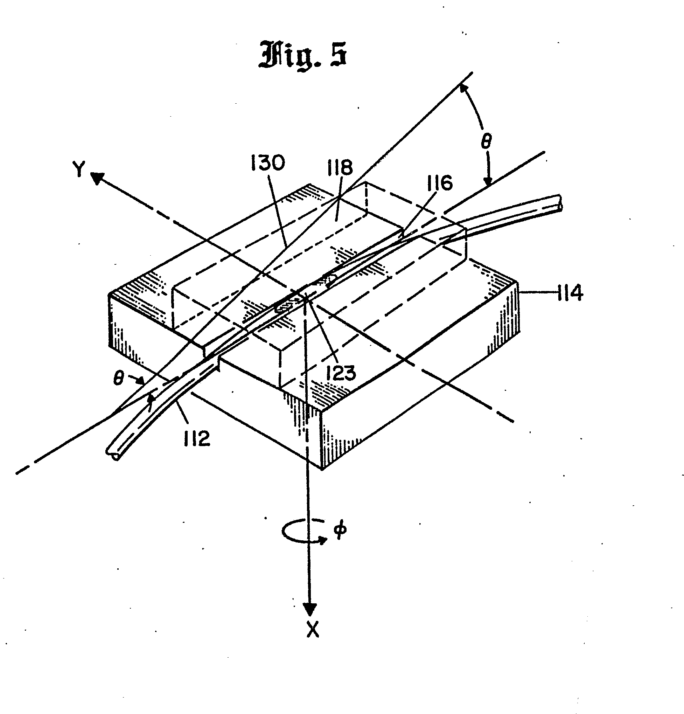

An embodiment of the invention which is suited for the production of elliptically polarized light is shown in Figures 4 and 5 wherein components which are the same as, or equivalent to, corresponding components in the embodiment of Figures 1-3 are desiganated by the same second and third reference numeral digits as their corresponding components in Figures 1-3 with the addition of a prefix digit"1". The polarizer of Figure 4 is similar to the embodiment illustrated in Figures 1-3 except that birefringent body 126 has both linear and circular birefringence.

It will be recalled from the previous discussion that, if both linear and circular birefringence are present, this combination of birefringence results in elliptical birefringence. The ensuing discussion will explain how elliptical birefringence can be used to produce elliptically polarized light.

In the exemplary embodiment shown in Figures 4 and 5, the elliptically birefringent body 126 is a material which is circularly birefringent for light propagating along axis 130 and linearly birefringent for light transmitted perpendicular to optical axis 130. Elliptical birefringence is created by cutting the crystal so that its optical axis 130 is at an angle θ to the plane of optically flat surface 128. In a preferred embodiment, birefringent body 26 is the same type of quartz as used in the embodiment of Figures 1-3. For right handed quartz, the birefringent indices are $N_1$ = 1.54811 and $N_2$ = 1.53917 corresponding to linearly polarized components parallel and perpendicular, respectively, to the optic axis. The circularly birefringent indices are, as previously given for the embodiment of Figures 1-3, $N_R$ = 1.53920 and $N_L$ = 1.53914, where the subscripts "R" and "L" again correspond to the index of refraction for right and left hand circularly polarized light.

The evanescent field of light having arbitrary polarization transmitted by optical fiber 112 in a direction 132 propagates within the birefringent body 126 parallel to surface 128 at an angle θ The light is divided into two counterroating elliptically polarized components 140 and 142 rotating in right handed and left handed directions, respectively, which travel with different velocities through birefringent body 126. Optical fiber 112 is formed of quartz having an index of refraction of N = 1.53916, the same index of refraction as the fiber of the embodiment of Figures 1-3. The indices of refraction are for light of a wavelength of approximately 760 nanometers.

The effective index of refraction seen by left hand elliptically polarized component 42 is greater than the index of optical fiber 112, while the effective refractive index of birefringent body 126 seen by right hand elliptically polarized component 40 is less than the index of refraction of optical fiber 112. Therefore, the left hand elliptically polarized component 42 is radiated from the fiber 112 into the birefringent body 126, while right hand elliptically polarized component 40 remains guided in the fiber 112 as shown schematically in the upper and lower right hand sides, respectively, of Figure 4. Thus the light transmitted through optical fiber 112 is strongly right elliptically polarized.

As can be seen in Figure 4, the major axes of elliptically polarized components 140 and 142 are perpendicular to each other. The ellipticity (ratio of major to minor axes of the polarization ellipse) is a function of the indices of refraction of optical fiber 112 and birefringent body 126 and the angle $\theta$. The ellipticity can be determined by methods of mathematical analysis known to those of ordinary skill in the art. For the embodiment shown, the ellipticity is approximately two to one for an angle $\theta = 5°$. When the angle $\theta = 0$, the light is circularly polarized. With increasing angle $\theta$, the ellipses become narrower and degenerate into lines, which means that the light is linearly polarized. Having the light at a right angle to the optic axis yields the special case of the linear polarizer of U.S. Patent 4,386,822 referred to previously.

By substituting left handed quartz for the right handed quartz of the embodiment discussed above, the left hand elliptical polarization remains in fiber 112 while the right hand polarization is radiated away. Only the directions of rotation of circularly polarized components 140 and 142 are interchanged from those shown and described when left hand quartz is substituted for right hand quartz. It can thus be seen that using a crystal that combines linear and circular birefringence, the polarizer 110 can be made to produce light having a selected elliptical state of polarization.

From the preceding description, it will be seen that the polarizer of the invention provides a means for producing circulary or elliptically polarized light of a high extinction ratio with little throughput loss.

Although the present invention has been described with reference to particular devices, numerous modifications will be obvious to those schooled in the art. Therefore, it is intended that such modifications shall lie within the spirit and scope of the invention as defined in the following claims.

18

## CLAIMS

1. A fiber optic polarizer for producing an ouput signal having a predetermined elliptical polarization from an input optical signal of arbitrary polarization, characterised by:

an optical fiber having a core and a cladding for propagating the optical signal;

an interaction region formed in a portion of the optical fiber;

a coupler positioned adjacent the interaction region for interacting with the evanescent field of the optical signal propagating in the interaction region to radiate components of the optical signal having a first selected elliptical polarization from the optical fiber so that only light of a second selected elliptical polarization is guided by the optical fiber past the interaction region.

2. The fiber optic polarizer of claim 1 wherein the elliptically polarized wave propagated by the optical fiber has a semi-major axis and a semi-minor axis, the semi-minor axis being equal to the semi-major axis, such that the wave retained within the optical fiber is circularly polarized.

3. The fiber optic polarizer of claim 2 wherein the coupler comprises a body of circularly birefringent material.

4. The fiber optic polarizer of claim 3 wherein the body of circularly birefringent material comprises a birefringent crystal.

5. The fiber optic polarizer of claim 4 wherein the birefringent crystal includes a cut therein for forming a planar surface, the crystal having an optical axis in the planar surface, the optical axis being substantially parallel to the longitudinal axis of the core at the interaction region.

6. The fiber optic polarizer of claim 5 wherein the crystal is a quartz crystal.

7. The fiber optic polarizer of claim 6 wherein the coupler comprises a body of birefringent material which is circularly birefringent for light propagating in a first direction

19

and linearly birefringent for light propagating in a second direction.

8. The fiber optic polarizer of claim 6 wherein the coupler comprises a quartz crystal having a cut therein to form a planar surface, the quartz crystal having an optic axis which makes an acute angle to the planar surface, the planar surface being parallel to the longitudinal axis of the optical fiber at the interaction region.

9. A fiber optic polarizer for producing elliptically polarized light characterised by:

a base having a slot therein;

an optical fiber having a core and a cladding, an interaction region being formed in the optical fiber where a portion of the fiber has a cladding thinner than the neighboring regions of the fiber, the interaction region being mounted within the slot so that the thinner cladding faces outwardly from the slot; and

a birefringent material mounted adjacent the interaction region so that evanescent field coupling transfers light of all but a selected first elliptical polarization out of the fiber into the birefringent material while light of a selected elliptical polarization remains within the fiber.

10. The fiber optic polarizer of claim 1 wherein the coupler comprises a material that is both circularly birefringent and linearly birefringent such that light propagating in the fiber beyond the interaction region is elliptically polarized.

11. A method for producing elliptically polarized light in an optical fiber, characterised by the steps of:

removing part of the cladding from a portion of the optical fiber to form an interaction region; and positioning a birefringent material adjacent the interaction region such that evanescent field coupling transfers light of a first selected elliptical polarization from

20

the optical fiber into the birefringent material while light of a second selected elliptical polarization remains in the fiber.

12. A method for producing polarized light circularly or elliptically polarized light, characterised by the steps of:

forming a slot in a base;

placing a length of an optical fiber having a core and a cladding in the slot so that a portion of the cladding projects out of the slot;

forming an interaction region wherein a portion of the evanescent field of a light signal propagating within the optical fiber extends out of the cladding; and

placing a coupling material adjacent the interaction region so that evanescent field coupling transfers light of all but a selected elliptical polarization propagated by the optical fiber from the fiber into the coupling material while light of the selected polarization propagated by the fiber remains within the fiber.

Fig. 1

**Fig. 2**

**Fig. 3**

Fig. 4

0196382

# Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-A-3 011 663 (LICENTIA) * page 8, line 27 - page 9, line 3; claims 1, 2, 5-7, figures 2A, 3 * | 1-5 | G 02 B 6/10<br>G 02 B 6/28 |
| D,X | US-A-4 386 822 (R.A. BERGH) * figures; column 3, line 49 - column 4, line 23; claim 5 * | 1,3-5, 11,12 | |

TECHNICAL FIELDS
SEARCHED (Int. Cl.4)

G 02 B 6/10
G 02 B 6/28

The present search report has been drawn up for all claims

| Place of search | Date of completion of the search | Examiner |
|---|---|---|
| BERLIN | 28-06-1986 | FUCHS R |